# EUROPEAN PATENT APPLICATION

(11) **EP 4 598 040 A1**
(43) Date of publication of application: **06.08.2025**
(21) Application number: 24163696.8
(22) Date of filing: 14.03.2024
(51) Int. Cl.: H04N 23/67

(54) **AUTOMATED METHOD OF ASSISTING MANUAL MATRIX FOCUSING MODE**

(30) Priority: 30.01.2024 PL 44764924
(71) Applicant: "Prolight" Spólka z ograniczona Odpowiedzialnoscia, 05-800 Pruszków (PL)
(72) Inventor: SLOMINSKI, Sebastian, 05-800 Pruszków (PL); SOBASZEK, Magdalena, 05-800 Pruszków (PL)
(74) Representative: LDS Lazewski Depo & Partners

(57) **Abstract**

An automated method of assisting manual matrix focusing mode is that once focus ring is manually set to the extreme position, the Canny algorithm for optimizing manual focus is started, with the following parameters: for noise reduction a Gaussian filter was used with a σ range of 0.5 to 2 for a mask size of h=5, for intensity gradient search a Sobel filter was used with a mask size of 3x3, for hysteresis thresholding, following thresholds were used: lower T1 (T_{L}) from 0.11 to 0.4 and upper T2(T_{H}) from 0.6 to 0.7, followed by a slow manual rotation of the focus ring to the opposite extreme position, wherein a simultaneous image sampling and calculation of the optimisation result are carried out, and when the highest value in the form of the highest sum of detected edge bright pixels is detected, its value is stored and the image changes colour, then once the extreme position of the focus ring is reached, rotation is performed in the opposite direction to the start point and when the highest value is detected, the image changes colour and the message "STOP" is displayed".

## Description

The subject of the invention is an automated method of assisting manual matrix focusing mode.

In every device deprived of an auto-focus system, such as CMOS/CCD sensor image recorders with RGB filters and, in particular, laboratory quality control devices or CMOS/CCD luminance parameters measurement devices with monochrome sensors having the highest sensitivity and dynamic range, the selection of image focus is done empirically "at a guess", even though image focus in luminance measurement mode is a critical value, directly influencing the result and accuracy of the luminance distribution measurement. Although the human eye has the physiological ability to perceive luminance and colour inhomogeneities, it is not possible to set the optimum image focus value specific to a particular sensor configuration, spectral correction filters and lens at the instantaneous operating point (focal length and aperture value). Laboratory-accurate cameras available on the market do not have the capability to automatically assist in focusing image/matrix and entire sensor subsystem with trichromatic correction filters and dedicated lenses. For auto-focus systems operating in live view mode, edge filters are typically used to process the source image to determine the focus point. Laplace, Sobel or Prewitt filters are the most commonly used. In the case of optimum exposure illumination, the issue involves basic image transformations that highlight edges, monochromatise image, eliminate noise so that it is not mistaken for points that are part of an edge, and ultimately establish thresholds above which it is certain that a given image point (pixel), represents the edge found. Then, when only the edges remain in the analyzed image (black or extreme white), the remaining elements are reset to zero. As a result of the transformations, all pixels representing the found edges are counted. The operation is repeated when the lens 'focus' value is changed, the transformation results in another value representing the sum of the pixels representing the found edges. The operation is repeated in a loop and the auto-focus engine takes subsequent positions. The focus point is then determined for the found value of the global maximum of the pixel counting function and the auto-focus engine adopts the calculated position. In an automated auto-focus system, focusing takes from several dozen milliseconds to 2 seconds, depending on the complexity of the image and the initial position of the auto-focus motor.

In manual modes, focusing is always done "at a guess", through visual evaluation of the image. In the case of laboratory systems based on the use of CMOS/CCD matrix sensors, very often area to be sharpened is limited to a small part of the sensor (e.g. common measurements of luminance distribution of LED optics). In this case, in order to focus the image of the light source on the surface of the matrix, it is necessary to use digital 'zooming', which naturally involves a loss of focus in the image, through so-called "antialiasing", which serves to fill in the deficiencies in the image representation with more image points (pixels of the display) than the source image has. In addition, this makes it difficult to subjectively find the point of optimum/best focus.

A method for continuously focusing a digital camera that is applicable for determining whether or not a digital camera performs a focusing procedure when the digital camera switches from a first scene to a second scene in a live view stage, is known from U.S. patent No. US8284296B2,. The continuous focusing method includes the following steps: a preview image of the second scene is obtained, a blur detection procedure is performed on the preview image to obtain the appropriate focus value. It is determined whether the focus value exceeds the focus threshold value or not. If not, a focus procedure is carried out; otherwise, if the focus value is greater than the focus threshold value, the digital camera still maintains the current focus focal length, which means that the focus focal length of the second scene is the same as that of the first scene.

A method for processing an image of an electronic device and an electronic device thereof comprising: a camera module configured for image acquisition; a processor in which, for each pixel of one frame of the acquired image, a reference pixel of the frame and pixel values in a rectangular area having each pixel as corners are summed to calculate a cumulative pixel value to generate an image quality processing frame of the cumulative pixel values, including the calculated cumulative pixel values corresponding to each pixel of the frame is known from Korean patent No. KR102407624B1.

A method for automatically focusing a camera based on SFR is known from Chinese patent No. CN114785953A, and the method includes the steps of: firstly, fixing the cross plate on the motion platform, driving the motion platform by a stepper motor with a feed screw, driving the cross plate in the Z axis direction providing the focusing step length of the motion platform and allowing the CMOS camera which clamps the lens to be detected, taking an image of the cross plate every time the motion platform translates one step; thirdly, calculating and analysing the SFR curve of the captured image using the machine image processing system and recording the depth position of the current motion platform on the Z-axis; and finally, the image changes from blurred to clear and then to blurred, wherein the machine image processing system evaluates the image definition by calculating the SFR curve of each image frame and records the depth information where the definition, namely the focal length of the measured lens is optimal. Provided that a large number of training samples are not needed, the focus speed of the lens improves significantly, the precision of the lens can be improved by reducing the focus step length of the motion platform and the focus speed and focus can be guaranteed simultaneously.

An autofocus image system is known from European patent No. EP2719162B1, which includes a pixel array coupled to a focus signal generator. The pixel array captures an image that has multiple edges. The generator generates a focus signal that is a function of multiple measures of edge sharpness measured at each of the multiple edges. The generator compares the sequence of gradients along the edges with one or more reference sequences of gradients and/or reference curves defined from data retrieved from non-volatile memory. The generator decides to reject or reduce the pressure on the edge contributing to the focal signal based on finding dissimilarities between the sequence of gradients with reference sequences or reference curves beyond a predefined threshold.

A method for determining the local contrast value of a digital image captured by an image sensor in a camera is known from European patent No. EP3503528B1. The method comprises: applying an edge detection algorithm to the digital image data and thereby obtaining a set of digital image edge data; calculating, from said set of data, an edge incidence value for the digital image; estimating, from the digital image data and the image sensor noise model, the estimated image sensor noise for the digital image; and calculating the local contrast value as a relationship between the digital image edge incidence value and the expected edge incidence value for the digital image. A method of adjusting the focus of the camera using the local contrast value of the images captured by the camera is also presented.

A method and apparatus for focusing an image are disclosed in Chinese patent No. CN110942440B, the method comprising the following steps: s1, obtaining the input image and its brightness information; s2, preprocessing the image; s3, calculating the preprocessed image variance information and distinguishing the boundary detail area from the flat image area; s4, extracting the boundary information of the dilated image by adopting a plurality of combined corrosion and expansion operations; s5, extracting the boundary of the preprocessed image and processing the obtained boundary information and the image boundary thickness information to obtain the image boundary sharpening result; s6, extracting the details of the pre-processed input image and processing the obtained detail information and the distinguishing information of the image boundary details and the flat area obtained in step S3 to obtain the image detail sharpening result; and s7, adding the image boundary sharpening information and the image detail sharpening information back to the original input image to obtain the final sharpened image brightness information.

A method for determining the local contrast value of a digital image captured by an image sensor in a camera is known from U.S. Patent No. US10757318B2, the method comprising: applying an edge detection algorithm to digital image data, thereby obtaining a dataset of digital image edges; calculating, from said dataset, an edge incidence value for the digital image; estimating, from the digital image data and the image sensor noise model, the estimated image sensor noise for the digital image; and calculating the local contrast value as a relationship between the digital image edge incidence value and the expected edge incidence value for the digital image, A method of adjusting camera focus using the local contrast value for images captured by the camera.

The aim of the invention is to develop a system for minimising focusing error based on Canny image analysis, which uses a multi-stage algorithm for edge detection on the screen, thus always allowing the optimum point of maximum focus to be found for a particular set of matrix, filters and lenses, without the need for visual quality assessment. Canny's multi-stage algorithm consists of 4 stages, the first stage enabling noise reduction through the use of a Gaussian filter, which is characterised by a monotonically decreasing impulse response as a function of frequency, resulting in much less distortion in the image, particularly at the edges of the object, the second stage uses filters for the detection of horizontal, vertical and diagonal edges to find luminance gradient of the image, and in the third stage, non-maximum pixels are removed by "thinning" the edges in a way that ensures their continuity, while in the fourth stage, irrelevant edges are removed (thresholding with hysteresis). The use of the algorithm supports manual focusing on any device without an auto-focus system.

The automated method of assisting manual matrix focusing mode according to the invention is characterised in that, after the manual setting of focus ring to the extreme position, the Canny algorithm optimizing the manual focusing is started, with the following parameters: for noise reduction, a Gaussian filter was used in the range σ from 0.5 to 2 for mask size h=5, for searching the image intensity gradient, a Sobel filter was used with mask size 3x3, for hysteresis thresholding following thresholds were used: lower T1(T_{L}) from 0.11 to 0.4 and upper T2(T_{H}) from 0.6 to 0.7, followed by a slow, manual rotation of the focus ring to the opposite extreme position, wherein a simultaneous image sampling and calculation of the optimization result are carried out, and when the highest value in the form of the highest sum of detected edge, bright pixels, is detected, its value is stored and the image changes colour, then once the extreme position of the focus ring is reached, rotation is performed in the opposite direction to the start point and when the highest value is detected, the image changes colour and the message "STOP" is displayed.

The object of the invention is presented in an embodiment.

### Example

1. Setting the focus ring manually to the extreme position.
2. Running Canny algorithm optimizing manual focus to determine parameters:
   (a) noise reduction - Gaussian filter of 5x5 matrix with σ = 1 is used
   (b) image intensity gradient search - Sobel filter with mask size 3x3 is used
   (c) hysteresis thresholding - using thresholds: lower T1(T_{L}) = 0.11 and upper T2(T_{H}) = 0.67, which gives for an 8-bit image T1(T_{L}) = 30/255 and upper T2(T_{H}) = 170/255.
3. Slow manual rotation of the focus ring to the opposite extreme position, with simultaneous image sampling and calculation of the optimization result, and once the highest value as the largest sum of detected edges, bright pixels, is detected, its value is stored.
4. When the highest value is detected, the image changes colour.
5. When the extreme position of the focus ring is reached, a rotation is performed in the opposite direction to the starting point.
6. When the largest value is detected, the image changes colour and "STOP" is displayed,

## Claims

1. An automated method of assisting manual matrix focusing mode, **characterised in that**, after manual setting of focus ring to the extreme position, the Canny algorithm optimizing manual focusing is started, with the following parameters: for noise reduction a Gaussian filter was used with σ ranging from 0.5 to 2 for mask size h=5, for searching the intensity gradient a Sobel filter with mask size 3x3 was used, for hysteresis thresholding following thresholds were used: lower T1(T_{L}) from 0.11 to 0.4 and upper T2(T_{H}) from 0.6 to 0.7, followed by a slow manual rotation of the focus ring to the opposite extreme position, wherein simultaneous image sampling and calculation of the optimization result are carried out, and after the highest value in the form of the highest sum of detected edge, bright pixels is detected, its value is stored and the image changes colour, then once the extreme position of the focus ring is reached, rotation is performed in the opposite direction to the start point and when the highest value is detected, the image changes colour and the message "STOP" is displayed.
